# EUROPÄISCHE PATENTSCHRIFT

(11) **EP 1 502 039 B1**
(45) Veröffentlichungstag und Bekanntmachung des Hinweises auf die Patenterteilung: **07.06.2006**
(21) Anmeldenummer: 03727319.0
(22) Anmeldetag: 17.04.2003
(51) Int. Cl.: F16F 7/01

(54) **FAHRWERK-BAUGRUPPE FÜR KRAFTFAHRZEUGE**
CHASSIS SUBASSEMBLY FOR MOTOR VEHICLES
ENSEMBLE CHASSIS POUR VEHICULES AUTOMOBILES

(30) Priorität: 26.04.2002 DE 10218907
(43) Veröffentlichungstag der Anmeldung: 02.02.2005
(73) Patentinhaber: TMD Friction Services GmbH, 51381 Leverkusen (DE)
(72) Erfinder: BRECHT, Jörg, 51519 Odenthal (DE); FIEDLER, Carsten, 13187 Berlin (DE); HOFFRICHTER, Wolfgang, 51061 Köln (DE)
(74) Vertreter: Müller, Eckhard
(86) Internationale Anmeldenummer: PCT/EP2003/004052
(87) Internationale Veröffentlichungsnummer: WO 2003/091595

(56) Entgegenhaltungen:
- EP-A- 0 563 555
- EP-A- 0 727 591
- WO-A-01/79725
- DE-A- 19 716 569
- FR-A- 2 783 028
- GB-A- 1 230 274
- US-A- 2 288 438
- US-A- 3 378 115
- US-A- 3 575 270
- US-A- 5 851 626
- US-A- 6 142 262

## Beschreibung

Die Erfindung betrifft eine Fahrwerk-Baugruppe nach dem Oberbegriff des Patentanspruchs 1.

Schwingungen von Maschinen und Antrieben bzw. von deren. Bauteilen sind oftmals unerwünscht. Dies gilt insbesondere für reibinduzierte Schwingungen, die in einem sehr breiten Frequenzbereich von ca. 300 Hz bis 15000 Hz auftreten und dabei zu sehr lauten und störenden Quietschgeräuschen führen. Besonders auffallend und lästig sind diese Quietschgeräusche bei Kraftfahrzeugbremsen.

Bekannt sind primäre und sekundäre Gegenmaßnahmen. Bei den primären Gegenmaßnahmen versucht man, durch Anbringung von Zusatzmassen die Eigenfrequenz des Systems zu verschieben oder über elastisch gelagerte Tilgermassen durch phasenverschobene Schwingungen die Bauteil-Schwingungen zu tilgen. Beide Maßnahmen sind nur in einem schmalen Frequenzband wirksam und können außerhalb dieses Frequenzbandes sogar zu einer Verstärkung der Schwingungen führen. Zu den sekundären Maßnahmen gehören auf dem Sektor der Bremsen und Kupplungen sogenannte Dämpfungsbleche, -folien oder -lacke, die auf der Reibbelag-Trägerplatte aufgebracht und so angeordnet werden, daß sie zwischen der Trägerplatte und deren Widerlager dämpfend oder entkoppelnd wirken. Da sie in der Kraftwirklinie liegen und dementsprechend hohen Belastungskräften ausgesetzt sind, können frühzeitige Schäden auftreten, die zu einer Funktionsbeeinträchtigung führen.

Ferner offenbart die DE 197 16 569 Al die Merkmale des Oberbegriffs des Patentanspruchs 1. Der Hohlraum, der die energieabsorbierende Füllung und den darin bewegbaren Festkörper enthält, ist in einem Tilgerelement angeordnet, welches in den Kolben einer Scheibenbremse eingesteckt ist. Das Tilgerelement ist mit einer Platte verschraubt, die ihrerseits mit der Reibbelag-Trägerplatte des Bremsbelags verklebt ist.

Den reibinduzierten Schwingungen können nicht nur die Bauteile der eigentlichen Bremsanlage ausgesetzt sein, wie etwa Bremsscheibe oder -trommel, Bremssattel, Bremsbelag, Kolben u.dgl., sondern auch benachbarte Fahrwerk-Bauteile, wie etwa Federbein, Spritzblech, Radkasten-Innenverkleidung, Achsenteile u.dgl.

Der Erfindung liegt die Aufgabe zugrunde, eine einfache und zuverlässige Verminderung bzw. Vermeidung von Schwingungen eines Brems- oder Kupplungsbelags zu ermöglichen.

Zur Lösung dieser Aufgabe weist die eingangs genannte Baugruppe erfindungsgemäß die Merkmale des kennzeichnenden Teils des Patentanspruchs 1 auf.

Auf diese Weise findet eine direkte und dementsprechend wirksame Dämpfung der Schwingungen des Brems- oder Kupplungsbelages statt. Da sich die energieabsorbierende Füllung bis in den Reibbelag hinein erstreckt, kann sie außerdem die Funktion einer Verschleißanzeige übernehmen, und zwar vor allen Dingen dadurch, daß sie nach entsprechendem Verschleiß des Reibbelages einen akustischen Effekt erzeugt.

Die Füllung wird frequenzunabhängig in schwingende Bewegung versetzt und dissipiert die in das Bauteil eingetragene Schwingungsenergie durch innere Reibung. Die Anordnung kann so getroffen werden, daß etwaige auf das Bauteil einwirkende mechanische Beanspruchungen die Funktion der energieabsorbierenden Füllung nicht beeinträchtigen können. Vorzugsweise wird man den Hohlraum in der Nähe von hohen Bewegungsamplituden der zu dämpfenden Schwingungsmoden anordnen.

Bevorzugt weist die energieabsorbierende Füllung des Hohlraums ein partikelförmiges Material auf, insbesondere Sand, Strahlgut, Glaspulver, Gußpulver, Kunststoffpartikel oder dergleichen. Als Alternative kommt eine viskoelastische Flüssigkeit oder ein pastöses Medium in Frage. In beiden Fällen ist es vorteilhaft, daß die energieabsorbierende Füllung mindestens einen in der Füllung bewegbaren Festkörper enthält, dessen Bewegungen die dissipative Energieabsorption der Füllung unterstützen.

Eine weitere, ebenfalls vorteilhafte Möglichkeit besteht darin, daß die energieabsorbierende Füllung ein gummielastisches Material, beispielsweise Gummi oder Kork, aufweist, das mindestens einen Festkörper enthält.

In jedem Falle muß der Festkörper nicht unbedingt starr sein; vielmehr kann er auch verformbar sein.

Die energieabsorbierende Füllung sollte den Hohlraum vorteilhafterweise mindestens weitgehend ausfüllen.

Der Hohlraum kann mindestens teilweise von einem Behälter gebildet werden, der am Bauteil angeordnet ist. Der Behälter kann dauerhaft, beispielsweise durch Kleben, Einpressen, Anpressen, Nieten, Schweißen, Fließpressen, Einrollen, Angießen, etc. oder auch lösbar durch Stecken oder Schrauben am Bauteil befestigt sein.

Die Trägerplatte kann mit mindestens einem zusätzlichen Stopfenloch versehen werden, das wahrend der Herstellung des Brems- oder Kupplungsbelags durch einem Stempel der Spiegelplatte gegen den Eintritt von Reibmaterial geschützt wird. Anschließend bohrt man das Reibmaterial in Fortsetzung des Stopfenloches aus, füllt den entstandenen Hohlraum mit energieabsorbierendem Material und verschließt ihn durch Aufkleben eines Dämpfungsblechs oder eines einen Teil der Trägerplatte bildenden Blechs.

Anstelle des Aufbohrens des Reibmaterials kann die Vertiefung auch durch einen entsprechend verlängerten Stempel der Spiegelplatte erzeugt werden.

Die Erfindung wird im folgenden anhand bevorzugter Ausführungsbeispiele im Zusammenhang mit der beiliegenden Zeichnung näher erläutert. Die Zeichnung zeigt in:
Figur 1 bis 4 verschiedene, eine energieabsorbierende Füllung enthaltende Behälter;
Figur 5 einen weiteren Behälter, und zwar als Beispiel zum Erleichtern des Verständnisses der Erfindung;
Figur 6 bis 9 verschiedene Behälter-Befestigungsmöglichkeiten, und zwar als Beispiele, die das Verständnis der Erfindung erleichtern;
Figur 10 einen Grundriß einer Trägerplatte, und zwar als Beispiel zum Erleichtern des Verständnisses der Erfindung;
Figur 11 einen Schnitt durch einen Bremsbelag.

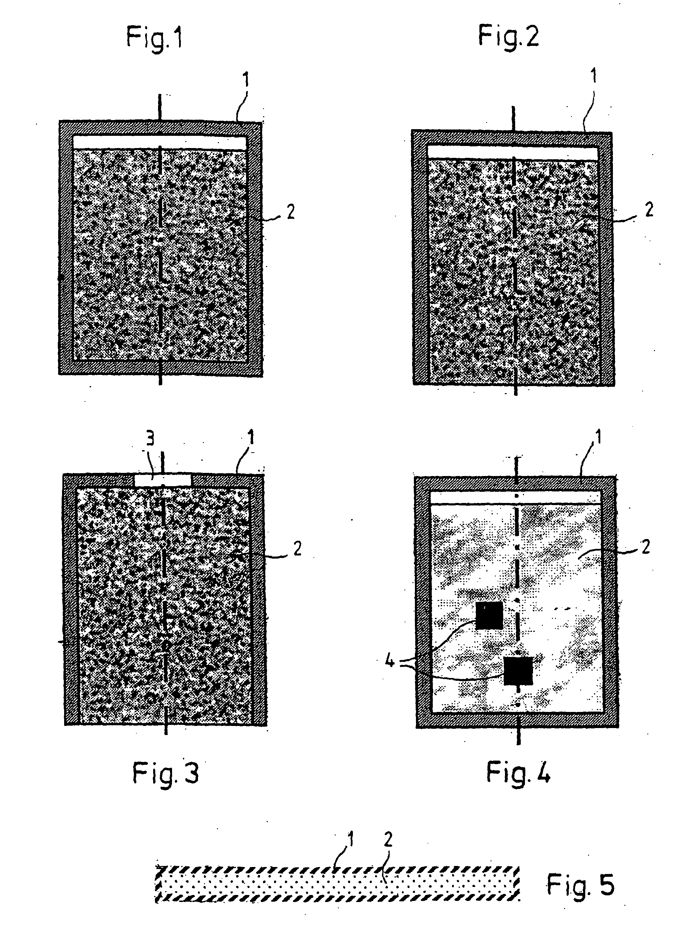

Figur 1 zeigt einen Behälter 1, der eine Füllung 2 aus energieabsorbierendem Material enthält. Die Füllung 2 besteht aus partikelförmigem Material, nämlich aus Strahlgut, welches den Behälter 1 fast vollständig ausfüllt.

Der Behälter 1 mit der Füllung 2 ist dazu vorgesehen, mit einem schwingungsanfälligen Bauteil verbunden zu werden. Sobald das Bauteil in Schwingungen versetzt wird, bewegt sich das Material der Füllung 2 innerhalb des Behälters 1 und dissipiert Schwingungsenergie. Dadurch werden die Schwingungen des Bauteils zumindest vermindert, wenn nicht gar völlig unterdrückt.

Der Behälter 1 nach Figur 2 unterscheidet sich von dem nach Figur 1 lediglich dadurch, daß sein Boden offen ist.

Gleiches gilt für den Behälter 1 nach Figur 3. Abgesehen davon weist dieser Behälter 1 in seinem Deckel eine Öffnung 3 auf, die für den Durchgang einer Schraube zum Verschrauben mit dem Bauteil gedacht ist. Außerdem nimmt hier die Füllung 2 den gesamten Innenraum des Behälters 1 ein.

Bei dem Behälter 1 nach Figur 4 besteht die Füllung 2 nicht aus pulverförmigem Material, sondern aus einer viskoelastischen Flüssigkeit, die zwei Festkörper 4 enthält. Letztere können sich, sobald das zugehörige Bauteil in Schwingungen versetzt wird, innerhalb der Flüssigkeit bewegen und damit zur Dissipation der Schwingungsenergie beitragen.

Wie oben bereits ausgeführt, kommt eine Vielzahl anderer Materialien für die Füllung 2 in Frage. In jedem Falle können Festkörper 4 in der Füllung 2 enthalten sein.

Nach Figur 5 bildet der Behälter 1 ein Sandwich-Dämpfungsblech für einen Bremsbelag.

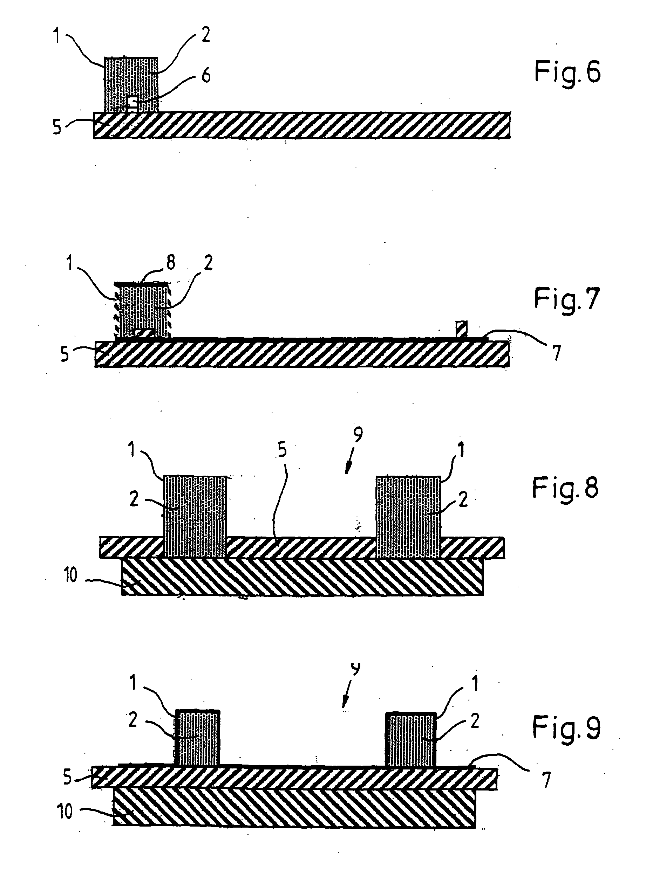

Figur 6 zeigt die Befestigung des Behälters 1 auf einer Trägerplatte 5 eines Bremsbelags. Mit der Trägerplatte 5 ist eine Schraube 6 verbunden, und zwar nach dem "Nelson-Verfahren". Auf diese ist der Behälter 1 aufgeschraubt.

Von dieser Art der Befestigung unterscheidet sich die nach Figur 7 dadurch, daß beim Vertaumeln eines Dämpfungsblechs 7 der Behälter 1 mit vertaumelt wird. Der Behälter 1 ist oben offen und wird nach dem Befüllen mittels eines Deckels 8 verschlossen.

Figur 8 zeigt einen Bremsbelag 9, dessen Trägerplatte 5 mit einem Reibbelag 10 versehen ist. Die Trägerplatte 5 weist zwei Öffnungen auf, in die die Behälter 1 eingepreßt sind.

Nach Figur 9 werden die Behälter 1 vom Dämpfungsblech 7 gebildet. Das Dämpfungsblech 7 weist hierzu entsprechende, tiefgezogene Näpfe auf.

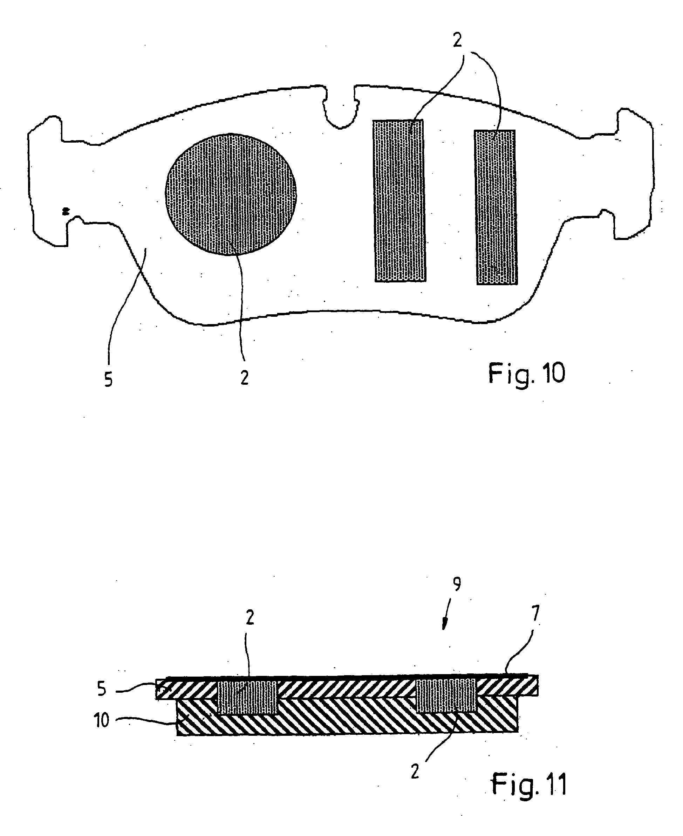

Nach Figur 10 ist die Trägerplatte 5 mit Vertiefungen versehen, die zur Aufnahme der Füllungen 2 dienen. Das Material der Füllungen 2 kann in würstchenförmigen Tüten abgefüllt sein. Auch kann es in einem Bindemittel, z.B. Wachs enthalten sein, welches sich beim Härten zersetzt. Das Material wird in die Vertiefungen eingepreßt, woraufhin das Aufpressen des Reibbelags erfolgt.

Bei dem Bremsbelag 9 nach Figur 11 ist die Trägerplatte 5, ähnlich wie bei der Ausführungsform nach Figur 8, mit zwei Öffnungen versehen. Beim Aufpressen des Reibbelags werden diese Öffnungen von entsprechenden Stempeln der Spiegelplatte reibmaterialfrei gehalten. Anders als bei der Ausführungsform nach Figur 8 ragen diese Stempel bei dem Bremsbelag 9 nach Figur 11 in das Reibmaterial hinein. Die Füllungen können sich also in das Reibmaterial hineinerstrecken. Das aufgeklebte Dämpfungsblech 7 dichtet die Öffnungen ab. Der große Vorteil dieser Ausführungsform besteht darin, daß die Füllungen gleichzeitig die Funktion einer Verschleißanzeige erfüllen.

Die Öffnungen, die sich in das Reibmaterial hineinerstrecken, können auch ausgebohrt werden.

Es versteht sich, daß zwischen der Trägerplatte und dem Reibbelag eine Underlayer angeordnet sein kann.

## Patentansprüche

1. Fahrwerk-Baugruppe für Kraftfahrzeuge, mit einer Bremsanlage, die reibinduzierte Schwingungen erzeugt, und mit mindestens einem Bauteil, das den reibinduzierten Schwingungen ausgesetzt ist, wobei
dem Bauteil mindestens ein Hohlraum zugeordnet ist, der eine energieabsorbierende Füllung (2) enthält, welche frequenz-unabhängig in schwingende Bewegung versetzt wird und die in das Bauteil eingetragene Schwingungsenergie durch innere Reibung dissipiert, und
die energieabsorbierende Füllung (2) mindestens einen in der Füllung bewegbaren Festkörper (4) enthält,
**dadurch gekennzeichnet,**
**daß** der Hohlraum in einer Trägerplatte (5) eines Brems- oder Kupplungsbelags (9) angeordnet ist und sich bis in dessen Reibbelag (10) hinein erstreckt.

2. Baugruppe nach Anspruch 1, **dadurch gekennzeichnet, daß** die energieabsorbierende Füllung (2) des Hohlraums ein partikelförmiges Material, eine viskoelastische Flüssigkeit, ein pastöses Medium oder ein gummielastisches Material aufweist.

3. Baugruppe nach Anspruch 2, **dadurch gekennzeichnet, daß** das partikelförmige Material Sand, Strahlgut, Glaspulver, Gußpulver, Kunststoffpartikel o. dgl. aufweist.

4. Baugruppe nach Anspruch 2, **dadurch gekennzeichnet, daß** das gummielastische Material Gummi oder Kork ist.

5. Baugruppe nach einem der Ansprüche 1 bis 4, **dadurch gekennzeichnet, daß** der Festkörper (4) verformbar ist.

6. Baugruppe nach einem der Ansprüche 1 bis 5, **dadurch gekennzeichnet, daß** die energieabsorbierende Füllung (2) den Hohlraum mindestens weitgehend ausfüllt.

7. Baugruppe nach einem der Ansprüche 1 bis 6, **dadurch gekennzeichnet, daß** der Hohlraum mindestens teilweise von einem Behälter (1) gebildet wird, der am Bauteil angeordnet ist.

## Claims

1. A chassis assembly for motor vehicles with a braking system which generates friction-induced vibrations and with at least one component which is subjected to the friction-induced vibrations, wherein at least one cavity is associated with the component, which contains an energy-absorbing filling (2), which is induced to move vibrationally independently of the frequency and dissipates the vibrational energy introduced into the component by internal friction and the energy-absorbing filling (2) includes at least one moveable solid body (4) in the filling, **characterised in that** the cavity is disposed in a support plate (5) of a brake or clutch lining (9) and extends into its frictional lining (10).

2. An assembly as claimed in claim 1, **characterised in that** the energy-absorbing filling (2) in the cavity is a particulate material, a visco-elastic liquid, a pasty medium or a rubber-elastic material.

3. An assembly as claimed in claim 2, **characterised in that** the particulate material is sand, blasting material, glass powder, cast iron powder, plastic particles or the like.

4. An assembly as claimed in claim 2, **characterised in that** the rubber-elastic material is rubber or cork.

5. An assembly as claimed in one of claims 1-4, **characterised in that** the solid body (4) is deformable.

6. An assembly as claimed in one of claims 1-5, **characterised in that** the energy-absorbing filling (2) at least substantially fills the cavity.

7. An assembly as claimed in one of claims 1 - 6, **characterised in that** the cavity is defined at least partially by a container (1), which is arranged on the component.

## Revendications

1. Ensemble châssis pour véhicules automobile comprenant un équipement de freinage qui produit des vibrations induites par la friction et comprenant au moins un composant qui est exposé aux vibrations induites par la friction, au moins un espace creux étant associé au composant, lequel contient une charge absorbant l'énergie (2) qui est mise dans un mouvement oscillant indépendamment de la fréquence et qui dissipe l'énergie oscillante appliquée dans le composant par friction interne et la charge absorbant l'énergie (2) contenant au moins un corps solide (4) pouvant se déplacer dans la charge, **caractérisé en ce que** l'espace creux est logé dans une plaque support (5) d'un équipement de freinage ou d'embrayage (9) et s'étend jusqu'à l'intérieur de sa garniture de friction (10).

2. Ensemble selon la revendication 1, **caractérisé en ce que** la charge absorbant l'énergie (2) de l'espace creux présente un matériau en forme de particules, un liquide viscoélastique, un milieu pâteux ou un matériau souple caoutchouteux.

3. Ensemble selon la revendication 2, **caractérisé en ce que** le matériau en forme de particules présente du sable, de la grenaille, de la poudre de verre, de la poudre de fonte, des particules de matière plastique ou similaire.

4. Ensemble selon la revendication 2, **caractérisé en ce que** le matériau souple caoutchouteux est du caoutchouc ou du liège.

5. Ensemble selon l'une des revendications 1 à 4, **caractérisé en ce que** le corps solide (4) est déformable.

6. Ensemble selon l'une des revendications 1 à 5, **caractérisé en ce que** la charge absorbant l'énergie (2) remplit au moins la plus grande partie de l'espace creux.

7. Ensemble selon l'une des revendications 1 à 6, **caractérisé en ce que** l'espace creux est formé au moins partiellement par un récipient (1) qui est monté sur le composant.
